# EUROPÄISCHE PATENTSCHRIFT

(11) **EP 1 064 194 B1**
(45) Veröffentlichungstag und Bekanntmachung des Hinweises auf die Patenterteilung: **29.01.2003**
(21) Anmeldenummer: 99917881.7
(22) Anmeldetag: 26.03.1999
(51) Int. Cl.: B64D 13/06

(54) **VERFAHREN UND VORRICHTUNG ZUR KLIMATISIERUNG VON FAHRZEUGEN UND INSBESONDERE VON FLUGZEUGEN**
METHOD AND DEVICE FOR AIR CONDITIONING VEHICLES, ESPECIALLY AIRPLANES
PROCEDE ET DISPOSITIF DE CLIMATISATION POUR VEHICULES, NOTAMMENT POUR AVIONS

(30) Priorität: 26.03.1998 DE 19813524; 26.01.1999 DE 19911606
(43) Veröffentlichungstag der Anmeldung: 03.01.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: MAYER, Erhard, D-83607 Holzkirchen (DE); SCHWAB, Rudolf, D-83661 Lenggries (DE)
(86) Internationale Anmeldenummer: EP9902091
(87) Internationale Veröffentlichungsnummer: WO99048756

(56) Entgegenhaltungen:
- EP-A- 0 301 607
- US-A- 5 516 330

## Beschreibung

### Technisches Gebiet

Die Erfindung bezieht sich auf ein Verfahren zur Klimatisierung von Fahrzeugen und insbesondere Flugzeugen, bei dem der der Passagierkabine zugeführte Luftstrom aus gegebenenfalls temperierter Außenluft mit einem Anteil an Umluft besteht , wobei der Anteil der Umluft an dem zugeführten Luftstrom mittels wenigstens eines CO₂-Sensors derart begrenzt wird, dass der CO₂-Anteil an der Luft in der Passagierkabine einen bestimmten Grenzwert nicht übersteigt und bei dem trockene Außenluft zugeführt wird bzw. auf eine Vorrichtung zur Durchführung dieses Verfahrens.

### Stand der Technik

Bei Kraftfahrzeugen ist es bekannt, für den der Klimatisierung des Fahrzeuginneren dienenden Luftstrom Umluft, also Luft aus dem Fahrzeuginneren, und Zuluft bzw. Außenluft zu mischen. Die Zuluft bzw. Außenluft muß dabei je nach ihrer Temperatur erwärmt oder gekühlt werden oder kann unmittelbar zur Kühlung der Passagierkabine dienen.

Die Zumischung der Umluft zur Außenluft erfolgt bei den auf dem Markt befindlichen Klimaanlagen für Personenkraftwagen (Pkw) nahezu ausschließlich unter Abgasgesichtspunkten: Steht der PKW in einem Stau, wird selbsttätig oder manuell von Außenluft-Zuführung auf Umluft-Betrieb umgeschaltet.

Ferner ist es aus der DE 195 40 566 A1 bekannt, trockene Umluft zur feuchten Außenluft zuzumischen, um ein Beschlagen der Scheiben des Pkw durch die in der Außenluft enthaltene Feuchtigkeit zu vermeiden.

Bei Bussen, Zügen oder Flugzeugen wird die Zumischung von Umluft zur Außenluft nicht in dem Maße wie in Pkw's eingesetzt; der Grund hierfür dürfte sein, daß Bakterien, Keime, Gerüche, Schweiß etc. durch die Umluft über die Klimaanlage nicht in der gesamten Passagierkabine verteilt werden sollen. Zum Stand der Technik bei Klimaanlagen für Busse wird exemplarisch auf die DE 39 26 638 A1 verwiesen.

Aus den Dokumenten EP-A-0 301 607 und US-A-5 516 330 sind Lösungen bekannt, von denen bei der Bildung des Oberbegriffs des Patentanspruchs der vorliegenden Lösung ausgegangen wurde. Bei beiden Lösungen aus den genannten Dokumenten steht die Aufgabe, die CO₂-Konzentration auf einem bestimmten Niveau zu halten. Insbesondere beschreibt dabei die EP-A-0 301 607 eine Vorrichtung zur Klimatisierung von Fahrzeugen, wobei mindestens ein CO₂-Sensor vorgesehen ist, dessen Ausgangssignal an einer Steuereinheit anliegt, die den Anteil der Umluft an dem in die Passagierkabine eingeleiteten Luftstrom steuert, und wobei der Sensor den CO₂-Anteil an der Luft in der Passagierkabine und/oder dem zugeführten Luftstrom erfasst.

Auf die vorstehend genannten Druckschriften sowie auf die nachfolgend noch genannten Veröffentlichungen wird im übrigen zur Erläuterung aller hier nicht näher beschriebenen Einzelheiten ausdrücklich verwiesen.

Bei Flugzeugen stellt sich darüberhinaus noch folgendes Problem: die Zuluft ist nicht nur sehr kalt, sondern auch sehr trocken.

Erfolgt die Zumischung von Umluft zur Außenluft - wie beim Stand der Technik - ausschließlich unter Energiegesichtspunkten - bei Flugzeugen in der Regel zur Kühlung der durch die Passagiere "aufgeheizten" Passagierkabine -, so treten u.a. folgende Probleme auf:

Bei starker Sonneneinstrahlung erfolgt beim Stand der Technik die Kühlung der Passagierkabine einfach dadurch, daß große Mengen sehr kalter Außenluft in den der Passagierkabine zugeführten Luftstrom gemischt werden; die Folge ist eine sehr trockene Kabinenluft, die von den Passagieren häufig zwar hingenommen, aber in der Regel als unangenehm empfunden wird. Bei empfindlichen Personen kann die trockene Luft sogar zu Beschwerden der Atemwege führen.

Bei geringer Sonneneinstrahlung ist dagegen der Umluftanteil an dem der Passagierkabine zugeführten Luftstrom sehr hoch, um Heizenergie einzusparen. Damit ist - wie erfindungsgemäß festgestellt worden ist - bei herkömmlichen Flugzeug-Klimaanlagen auch der Anteil an CO₂ in der Kabinenluft sehr hoch und liegt häufig über einem angenehmen bzw. verträglichen Wert, der doch den sogenannten Pettenkofer-Grenzwert charakterisiert ist.

Aus Gründen, über die trotz der vorstehenden Darlegungen nur spekuliert werden kann, verzichten ferner manche Fluggesellschaften auf die Zumischung von Umluft für die Klimatisierung des Flugzeuginneren.

Da jedoch - wie bereits ausgeführt - die Außenluft und damit die Zuluft sehr kalt ist, hätte die Mischung von warmer Umluft und kalter Zuluft den Vorteil, daß die zum Temperieren des der Passagierkabine zugeführten Luftstroms benötigte Energiemenge verglichen mit der alleinigen Verwendung von Zuluft verringert wird.

### Darstellung der Erfindung

Der Erfindung liegt die Aufgabe zugrunde, ein Verfahren sowie eine Vorrichtung zur Klimatisierung von Fahrzeugen und insbesondere von Flugzeugen anzugeben, mit dem bei möglichst geringem Energieverbrauch eine insbesondere unter Behaglichkeiten- und Verträglichkeitsgesichtspunkten angenehme Temperierung der Passagierkabine möglich ist.

Erfindungsgemäße Lösungen dieser Aufgabe sind in den nebengeordneten Ansprüchen 1 bzw.15 angegeben. Weiterbildungen der Erfindung sind Gegenstand der abhängigen Ansprüche.

Vorrichtungen zur Durchführung des erfindungsgemäßen Verfahrens sind Gegenstand der Ansprüche 15 folgende.

Den in den Ansprüchen gekennzeichneten verschiedenen Merkmalen liegt der gemeinsame Grundgedanke zugrunde, eine Mischung der Außenluft und der Umluft nicht unter energetischen oder Abgas-Gesichtspunkten, sondern unter Behaglichkeit- bzw. Verträglichkeits-Gesichtspunkten vorzunehmen.

Die erfindungsgemäße Lösung geht von der aus dem Stand der Technik bekannten Möglichkeit aus, bei der der Anteil der Umluft an dem zugeführten Luftstrom mittels wenigstens eines CO₂-Sensors derart begrenzt wird, daß der CO₂-Anteil an der Luft in der Passagierkabine einen bestimmten Grenzwert nicht übersteigt. Der Grenzwert des CO₂-Anteils beträgt beispielsweise 0,15 Vol% und bevorzugt 0,10 Vol%; dieser Wert ist der sogenannte Pettenkofer-Grenzwert, oberhalb dem Ermüdungserscheinungen und/oder Reizungen der Augen bzw. Atemwege auftreten können.

Die Steuerung bzw. Regelung des Umluftanteils derart, daß ein bestimmter Kohlendioxid-Wert nicht überschritten wird, stellt damit eine "Master"-Regelung für alle weitergehenden bzw. untergeordneten Regelungen des Umluftanteils dar, die bevorzugt "slave"-Regelungen abhängig von der "master"-Regelung sind.

In diesem Zusammenhang ist es besonders bevorzugt (allerdings nicht unbedingt erforderlich), wenn die erfindungsgemäße Vorrichtung so ausgelegt ist, daß sie eine Außenluft-Menge von mindestens 0,5m³/min pro Passagier in die Passagierkabine zuführt. Weiterhin ist es bevorzugt, wenn die Luftzuführung derart ausgelegt ist, daß sie wenigstens 20 mal pro Stunde für einen Luftaustausch sorgt.

Das erfindungsgemäße Verfahren und die erfindungsgemäße Vorrichtung ist bei allen Arten von Fahrzeugen, wie Pkw's, Lastkraftwagen, Bussen oder Schiffen anwendbar. Besonders bevorzugt ist das erfindungsgemäße Verfahren bzw. die erfindungsgemäße Vorrichtung jedoch bei Flugzeugen, bei denen aufgrund der sehr kalten Außenluft, wie sie in Höhen, in denen insbesondere Passagierflugzeuge normalerweise fliegen, anzutreffen ist, das Problem auftritt, daß die zugeführte Außenluft nach ihrer Erwärmung auf Raumtemperatur sehr trocken ist. Darüberhinaus verfügen Flugzeuge über eine Druckkabine, so daß aufgrund des weitgehend geschlossenen Systems - die Leckage beträgt bei Flugzeugen mit einer Druckkabine typischerweise 10% - gerade unter Verträglichkeitsgesichtspunkten weitergehende Probleme als bei anderen Fahrzeugen auftreten.

Bei Flugzeugen - natürlich aber auch bei anderen Fahrzeugen - ist es deshalb vorgesehen, wenn unterhalb des durch den CO₂-Sensor vorgegebenen Grenzwertes an Umluft der Anteil der Umluft an dem zugeführten Luftstrom derart gesteuert wird, daß die relative Luftfeuchtigkeit in einem "angenehmen" Feuchtigkeitsbereich gehalten wird, der größer ist als die relative Feuchtigkeit der zugeführten Außenluft nach Erwärmung auf Raumtemperatur. Im Gegensatz zum Stand der Technik bei Kraftfahrzeugen, bei dem der Umluft-Anteil an der umgewälzten Luftmenge ausschließlich unter Energiebilanz- oder Abgas-Gesichtspunkten eingestellt wird und im übrigen die Feuchtigkeit eher störend ist, wird bei dem erfindungsgemäßen Verfahren der Anteil der Umluft an der im Fahrzeug umgewälzten Luftmenge derart gesteuert bzw. geregelt, daß die relative Luftfeuchtigkeit in etwa in einem vorgegebenen (angenehmen) Bereich gehalten wird.

Das erfindungsgemäße Verfahren hat im Vergleich zu herkömmlichen Verfahren den besonderen Vorteil, daß es nicht erforderlich ist, die Zuluft zu befeuchten, bzw. daß es möglich ist, die Wassermenge, die der Zuluft zur Befeuchtung zugegeben werden muß, deutlich zu verringern.

Damit ist es insbesondere problemlos möglich, die relative Luftfeuchtigkeit bei Kabinentemperatur und insbesondere bei 23°C auf einen Wert von wenigstens 20%, bevorzugt über 30% zu bringen. Durch diese Werte erhält man ein angenehmes Raumklima.

Um zu vermeiden, daß aufgrund des vergleichsweise großen Umluftanteils Bakterien, Keime, Gerüche, Schweiß etc. in der Passagierkabine verteilt werden, wird der zugeführte Luftstrom über wenigstens einen Filter in die Passagierkabine eingeleitet. Die Lufteinleitung kann in an sich bekannter Weise über die Fahrzeugdecke und/oder über die Rückseite der Vordersitze erfolgen. Dabei ist es insbesondere möglich, die Luftauslässe in der Rückseite der Rückenlehne des jeweiligen Vordersitzes einschließlich eventuell vorgesehener ausklappbarer Tische etc. vorzusehen.

Der oder die Filter können insbesondere großflächige Filter mit geringem Strömungswiderstand sein, die bevorzugt die Luft hinsichtlich Bakterien, Gerüchen und Aerosolen reinigen. Unter dem Begriff "Aerosol" werden dabei Partikel, organische Substanzen, Stäube, Endotoxine, Tröpfchen etc. zusammengefaßt.

Der bzw. die beispielsweise in der Kabinendecke oder in dem jeweiligen Vordersitz vorgesehenen großflächigen Filter mit geringem Strömungswiderstand können insbesondere Mikrofilter oder Compositfilter sein. Bei einer Weiterbildung der Erfindung sind der oder die Filter ein Mikrofilter mit Aktivkohlebeschichtung oder mit einer Aktivkohlekassette und/oder ein Mikrofilter mit einem zusätzlichen Filter aus Zeolithen. Weiterhin können der oder die Filter elektrisch vorgespannt und/oder Faservliese sein.

Die umgewälzte Luft kann aufgrund des oder der großflächigen Filter dennoch mit geringer Luftgeschwindigkeit zugeführt werden, wobei jedem Fahrzeugsitz eine Steuermöglichkeit zugeordnet sein kann, die gegebenenfalls ein Raumklimamessgerät aufweisen kann. Raumklimamessgeräte sind beispielsweise in der DE 32 OS 704 A1 oder dem Artikel "Entwicklung eines Messgerätes zur Ermittlung der physikalischen Raumklimabedingungen", aus "Gesundheits-Ingenieur, 1985, Seite 175 bis 192" beschrieben. Auf diese Druckschriften wird im übrigen zu Erläuterung aller hier nicht näher beschriebenen Einzelheiten ausdrücklich verwiesen.

Durch die Verwendung von Raumklimamessgeräten ist eine Steuerung der Oberflächentemperatur der Luftaustrittsfläche und der Luftbewegung unter physiologischen Gesichtspunkten und insbesondere gemäß der thermischen Behaglichkeit möglich. Damit kann jeder Insasse den ihn beaufschlagenden Luftstrom nach eigenen Wünschen einstellen.

Insbesondere können der bzw. die Filter in der Austrittsöffnung des Luftstroms in die Passagierkabine vorgesehen sein; alternativ oder zusätzlich kann zumindest ein Teil des Luftstroms durch Austrittsdüsen austreten.

Die erfindungsgemäße Vorrichtung zur Durchführung des Verfahrens entsprechend des Oberbegriffs des Patentanspruchs 15, weist wenigstens einen Feuchtigkeitssensor in der Abluft auf. Die Ausgangssignale des bzw. der Sensoren liegen an einer Steuereinheit an, die den Anteil der Umluft an der umgewälzten Luftmenge steuert. Damit kann die Steuereinheit den Anteil so einstellen, daß die gewünschte relative Luftfeuchtigkeit erreicht wird.

Selbstverständlich kann ein weiterer Feuchtigkeitssensor vorgesehen sein, der die Luftfeuchtigkeit der (bei Flugzeugen in der Regel trockenen) Zuluft erfaßt, so daß Schwankungen der relativen Luftfeuchtigkeit aufgrund schwankender Feuchtigkeit der Zuluft vermieden werden.

Die Rückgewinnung des in der Luft der Passagierkabine enthaltenen Wassers läßt sich alternativ oder zusätzlich auch dadurch realisieren, daß die in der Fortluft - also der beispielsweise bei einem Flugzeug zum Druckausgleich aufgrund der zugeführten Außenluft nach außen abgeführten Kabinenluft - enthaltene Feuchtigkeit kondensiert und in den in die Passagierkabine zugeführten Luftstrom zurückgeführt wird.

Aufgrund der erfindungsgemäßen Maßnahmen ist es in der Regel nicht mehr erforderlich, Wasser mitzuführen, mit dem die Kabinenluft befeuchtet wird.

### Kurze Beschreibung der Zeichnung

Die Erfindung wird nachstehend anhand von Ausführungsbeispielen unter Bezugnahme auf die Zeichnung näher beschrieben, in der zeigen:
- Fig. 1: schematisch eine Passagierkabine mit einer erfindungsgemäßen Luftführung, und
- Fig. 2: einen Sitz mit einer erfindungsgemäßen Luft führung.

### Beschreibung von Ausführungsbeispielen

Bei den nachstehend beschriebenen Ausführungsbeispielen werden ohne Beschränkung der allgemeinen Anwendbarkeit der Erfindung - jedoch bevorzugt - Verfahren und Vorrichtungen zur Klimatisierung von Flugzeugen beschrieben.

Bei der Beschreibung der Erfindung wird von folgenden bekannten Daten ausgegangen, die typisch für derzeit auf dem Markt bzw. in Entwicklung befindliche Flugzeugtypen sind:

Typischerweise geben die Passagiere 40 Gramm Wasserdampf - durch Schweiß bzw. die Atemluft - pro Stunde und pro Passagier ab.

Die pro Passagier und pro Minute zugeführte Frischluftmenge, d. h. die Menge an Außenluft sollte mindestens 0,5 m³ betragen.

Die in der Kabine befindliche Luft sollte wenigstens 20 mal pro Stunde ausgetauscht werden.

Die Temperatur in der Kabine sollte zwischen 22 und 24°C betragen; um diese Temperatur zu erreichen, ist es erforderlich, daß die Temperatur der über die Klimaanlage zugeführten Luft ca. 18°C ist, da in der Regel die Passagiere in der Kabine mehr Wärme abgeben, als das Flugzeug über die Außenhaut nach außen abgibt.

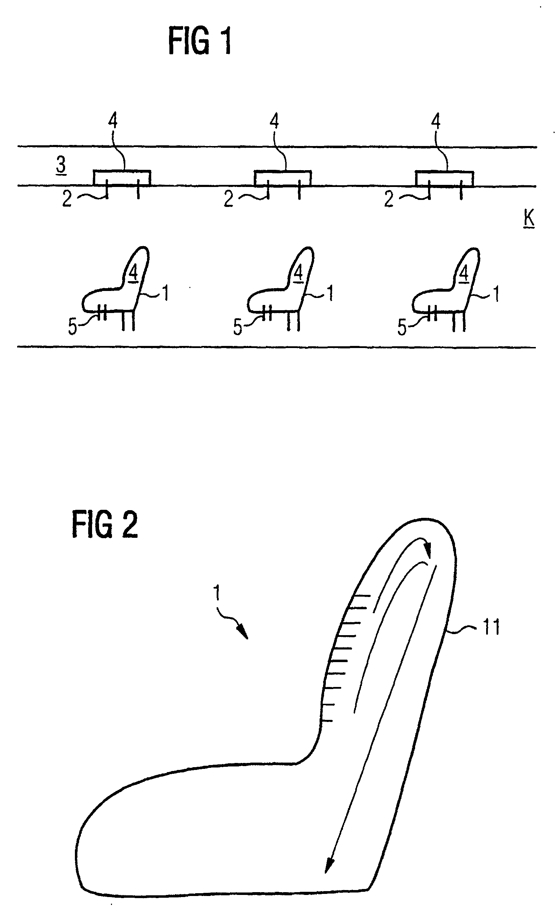

Unter Zugrundelegung dieser Daten zeigt Fig. 1 ein erstes Ausführungsbeispiel der Erfindung. In Fig. 1 ist - wie bereits ausgeführt - ohne Beschränkung der allgemeinen Anwendbarkeit ein Querschnitt durch einen Teil der Kabine K eines Passagierflugzeugs dargestellt.

In der Kabine K sind Sitze 1 vorgesehen, wobei jedem Sitz 1 eine Belüftung 2 zugeordnet ist, die bei dem gezeigten Ausführungsbeispiel wenigstens eine Düse umfaßt. Die Zuführung der Luft erfolgt dabei über einen Kanal 3, der oberhalb der Sitze 1 vorgesehen ist. In dem Kanal 3 sind Filter 4 vorgesehen. Im Bereich der Sitze 1 sind Öffnungen 5 vorgesehen, durch die die verbrauchte Luft aus der Kabine K abgesaugt wird. In den Sitzen und insbesondere in der Rückenlehne können ebenfalls Filter 4 vorgesehen sein.

Fig. 2 zeigt ein zweites Ausführungsbeispiel der Erfindung, bei dem die Luft aus aus der nicht näher dargestellten Kabine zumindest zum Teil über die Sitze und insbesondere über die Rückenlehne 11 des dargestellten Sitzes 1 abgesaugt wird. Die Öffnungen, durch die die Luft abgesaugt wird, sind dabei in der Rückenlehne vorgesehen. Hierdurch wird effektiv eventuellen Schwitzen entgegengewirkt. Die Luft, über die Rückenlehnen abgesaugt wird, kann insbesondere dann - wenn mehrere Kanäle für die Luft vorgesehen sind - im wesentlichen als Fortluft dienen. Alternativ oder zusätzlich ist es möglich, daß die über die Rückenlehne abgesaugte Luft über den im Sitz vorgesehenen Filter geleitet wird und über die Rückseite der Rückenlehne wieder austritt.

Dabei ist es besonders bevorzugt, wenn die Luft, die abgesaugt wird, an der Rückenlehne "entlang streicht", so daß die durch Schwitzen entstehende Feuchtigkeit besonders effektiv von der abgesaugten Luft aufgenommen wird.

Bei den in den Figuren 1 und 2 dargestellten Ausführungsbeispielen ist zusätzlich ein CO₂-Sensor vorgesehen, dessen Ausgangssignal an einer nicht dargestellten Steuereinheit anliegt, die den Anteil der Umluft an dem in die Passagierkabine eingeleitetem Luftstrom steuert. Der Sensor erfasst den CO₂-Anteil an der Luft in der Passagierkabine und/oder dem zugeführten Luftstrom.

Weiterhin ist in der Abluft ein Feuchtigkeitssensor vorgesehen, dessen Ausgangssignal an der Steuereinheit anliegt, die den Anteil der Umluft an der umgewälzten Luftmenge steuert.

## Patentansprüche

1. Verfahren zur Klimatisierung von Fahrzeugen und insbesondere von Flugzeugen, bei dem der der Passagierkabine zugeführte Luftstrom aus gegebenenfalls temperierter Außenluft und einem Anteil an Umluft besteht, wobei der Anteil der Umluft an dem zugeführten Luftstrom mittels wenigstens eines CO₂-Sensors derart begrenzt wird, dass der CO₂-Anteil an der Luft in der Passagierkabine einen bestimmten Grenzwert nicht übersteigt und bei dem trockene Außenluft zugeführt wird,
**dadurch gekennzeichnet, dass** unterhalb des durch den CO₂-Sensor vorgegebenen Grenzwertes an Umluft der Anteil der Umluft an dem zugeführten Luftstrom derart gesteuert wird, dass die relative Luftfeuchtigkeit in einem Feuchtigkeitsbereich gehalten wird, der größer ist als die relative Feuchtigkeit der zugeführten Außenluft nach Erwärmung auf Raumtemperatur, und dass der zugeführte Luftstrom über wenigstens einen Filter (4) in Passagierkabine eingeleitet wird.

2. Verfahren nach Anspruch 1,
**dadurch gekennzeichnet, dass** die relative Luftfeuchtigkeit bei Kabinentemperatur und insbesondere bei 23 °C wenigstens 20%, bevorzugt über 30% beträgt.

3. Verfahren nach einem der Ansprüche 1 bis 2,
**dadurch gekennzeichnet, dass** der Grenzwert des CO₂-Anteils 0,15 Vol% und bevorzugt 0,10 Vol% ist.

4. Verfahren nach einem der Ansprüche 1 bis 3,
**dadurch gekennzeichnet, dass** die in der Fortluft enthaltene Feuchtigkeit kondensiert und in den in die Passagierkabine zugeführten Luftstrom zurückgeführt wird.

5. Verfahren nach einem der Ansprüche 1 bis 4,
**dadurch gekennzeichnet, dass** der oder die Filter (4) großflächige Filter mit geringem Strömungswiderstand sind, die die Luft hinsichtlich Geruchsstoffen und Aerosolen reinigen.

6. Verfahren nach Anspruch 5,
**dadurch gekennzeichnet, dass** der bzw. die Filter (4) in der Austrittsöffnung des Luftstroms in die Passagierkabine vorgesehen sind.

7. Verfahren nach Anspruch 5 oder 6,
**dadurch gekennzeichnet, dass** zumindest ein Teil des Luftstroms durch Austrittsdüsen austritt.

8. Verfahren nach einem der Ansprüche 1 bis 7,
**dadurch gekennzeichnet, dass** der Luftstrom über die Kabinendecke zugeführt wird.

9. Verfahren nach Anspruch 8,
**dadurch gekennzeichnet, dass** der oder die Filter (4) in einem Hohlraum oberhalb der Decke vorgesehen sind.

10. Verfahren nach einem der Ansprüche 5 oder 6,
**dadurch gekennzeichnet, dass** die Einleitung des Luftstroms über die Rückseite des jeweiligen Vordersitzes erfolgt.

11. Verfahren nach Anspruch 10,
**dadurch gekennzeichnet, dass** der oder die Filter (4) in dem jeweiligen Vordersitz und insbesondere in der Rückenlehne (11) vorgesehen sind.

12. Verfahren nach einem der Ansprüche 1 bis 11,
**dadurch gekennzeichnet, dass** die Luft aus dem Fahrgastraum zumindest zum Teil über die Sitze (1) und insbesondere über die Rückenlehnen (11) der Sitze (1) abgesaugt wird.

13. Verfahren nach Anspruch 12,
**dadurch gekennzeichnet, dass** die Luft, die über die Rückenlehnen (11) abgesaugt wird, im wesentlichen als Fortluft dient.

14. Verfahren nach Anspruch 12 oder 13,
**dadurch gekennzeichnet, dass** die über die Rückenlehne (11) abgesaugte Luft über den im Sitz (1) vorgesehenen Filter (4) geleitet wird und über die Rückseite der Rückenlehne (11) wieder austritt.

15. Vorrichtung zur Durchführung des Verfahrens der Ansprüche 1 bis 14 zur Klimatisierung von Fahrzeugen und insbesondere von Flugzeugen mit einer Einrichtung zur Zuführung eines Luftstroms in die Passagierkabine, welcher aus gegebenenfalls temperierter Außenluft und einem Anteil an Umluft besteht, und mit einer Steuereinheit mit wenigstens einem CO₂-Sensor, welche den Anteil der Umluft an dem zugeführten Luftstrom derart begrenzt, dass der CO₂-Anteil an der Luft in der Passagierkabine einen bestimmten Grenzwert nicht übersteigt,
**dadurch gekennzeichnet, dass**
in der Abluft bzw. Zuluft mindestens ein Feuchtigkeitssensor vorgesehen ist, dessen Ausgangssignal an der Steuereinheit anliegt und dass diese derart ausgebildet ist, dass sie den Anteil der Umluft an der umgewälzten Luftmenge derart steuert, dass die relative Luftfeuchtigkeit in einem Feuchtigkeitsbereich gehalten wird, der größer ist als die relative Feuchtigkeit der zugeführten Außenluft nach Erwärmung auf Raumtemperatur.

16. Vorrichtung nach Anspruch 15,
**dadurch gekennzeichnet, dass** in den Fahrzeugen mindestens eine Kabinendecke bzw. mindestens ein Sitz vorhanden ist und dass in der Kabinendecke unter/oder in der Rückseite eines Sitzes (1), insbesondere in der Rückenlehne (11) ein großflächiger Filter (4) mit geringem Strömungswiderstand anbringbar ist.

17. Vorrichtung nach Anspruch 16,
**dadurch gekennzeichnet, dass** der Filter (4) derart ausgebildet ist, dass er die Luft hinsichtlich Geruch und Aerosolen reinigt.

18. Vorrichtung nach Anspruch 16 oder 17,
**dadurch gekennzeichnet, dass** der Filter (4) ein Mikrofilter oder ein Compositfilter ist.

19. Vorrichtung nach Anspruch 18,
**dadurch gekennzeichnet, dass** der Filter (4) ein Mikrofilter mit Aktivkohlebeschichtung oder einer Aktivkohlekassette und/oder ein Mikrofilter mit einem zusätzlichen Filter aus Zeolithen ist.

20. Vorrichtung nach einem der Ansprüche 16 bis 19,
**dadurch gekennzeichnet, dass** der Filter (4) elektrisch vorgespannt ist.

21. Vorrichtung nach einem der Ansprüche 16 bis 21,
**dadurch gekennzeichnet, dass** der Filter (4) ein Faservlies aufweist.

22. Vorrichtung nach einem der Ansprüche 15 bis 21,
**dadurch gekennzeichnet, dass** die umgewälzte Luft aufgrund der großflächig ausgeführten Filter (4) mit geringer Luftgeschwindigkeit zugeführt wird.

23. Vorrichtung nach Anspruch 22,
**dadurch gekennzeichnet, dass** die Luftzuführung derart ausgelegt ist, dass sie Außenluft von mindestens 0,5 m³/min pro Passagier zuführt.

24. Vorrichtung nach einem der Ansprüche 15 bis 23,
**dadurch gekennzeichnet, dass** die Luftzuführung derart ausgelegt ist, dass sie wenigstens 20 mal pro Stunde für einen Luftaustausch sorgt.

25. Vorrichtung nach einem der Ansprüche 15 bis 24,
**dadurch gekennzeichnet, dass**
in den Fahrzeugen mehrere Sitze vorhanden sind und jedem dieser Sitze eine Steuermöglichkeit für den diesen Sitz beaufschlagenden Luftstrom zugeordnet ist.

26. Vorrichtung nach einem der Ansprüche 15 bis 25,
**dadurch gekennzeichnet, dass**
in den Fahrzeugen mehrere Sitze vorhanden sind und dass pro Sitz (1) ein Raumklimamessgerät vorgesehen ist, welches mit der Steuereinheit verbunden ist, so daß eine Steuerung der Oberflächentemperatur der Luftaustrittsfläche, durch welche der Luftstrom in die Kabine geleitet wird, und der Luftbewegung unter physiologischen Gesichtspunkten und insbesondere gemäß der thermischen Behaglichkeit erfolgt.

## Claims

1. Method for air conditioning vehicles, especially aircraft, in which the airflow supplied to the passenger cabin comprises outside air, which is possibly temperature-controlled, and a portion of recirculated air, the portion of recirculated air in the supplied airflow being limited by at least one CO₂ sensor in such a way that the CO₂ portion in the air in the passenger cabin does not exceed a specific limit value, and in which dry outside air is supplied,
**characterised in that** below the limit value of recirculated air, predetermined by the CO₂ sensor, the portion of recirculated air in the supplied airflow is controlled in such a way that the relative air humidity is kept in a humidity range which is greater than the relative humidity of the supplied outside air after it has been heated to room temperature, and **in that** the supplied airflow is introduced into the passenger cabin via at least one filter (4).

2. Method according to claim 1,
**characterised in that** the relative air humidity at cabin temperature, and especially at 23°C, is at least 20%, preferably more than 30%.

3. Method according to one of claims 1 to 2,
**characterised in that** the limit value of the CO₂ portion is 0.15 % by volume and preferably 0.10 % by volume.

4. Method according to one of claims 1 to 3,
**characterised in that** humidity contained in the outgoing air condenses and is returned to the airflow supplied to the passenger cabin.

5. Method according to one of claims 1 to 4,
**characterised in that** the filter or filters (4) are large-surface filters with low flow resistance which clean the air in respect of odorous substances and aerosols.

6. Method according to claim 5,
**characterised in that** the filter or filters (4) are provided in the outlet for the airflow into the passenger cabin.

7. Method according to claim 5 or 6,
**characterised in that** at least a portion of the airflow escapes through exit nozzles.

8. Method according to one of claims 1 to 7,
**characterised in that** the airflow is supplied via the cabin ceiling.

9. Method according to claim 8, **characterised in that** the filter or filters (4) are provided in a cavity above the ceiling.

10. Method according to one of claims 5 or 6,
**characterised in that** the airflow is introduced via the rear of the respective front seat.

11. Method according to claim 10,
**characterised in that** that the filter or filters (4) are provided in the respective front seat and especially in the seat back (11).

12. Method according to one of claims 1 to 11,
**characterised in that** the air is extracted from the passenger compartment at least partially via the seats (1) and especially via the backs (11) of the seats (1).

13. Method according to claim 12,
**characterised in that** the air which is extracted via the seat backs (11) serves substantially as outgoing air.

14. Method according to claim 12 or 13,
**characterised in that** the air extracted via the seat back (11) is guided over the filter (4) provided in the seat (1) and escapes again via the rear side of the seat back (11).

15. Apparatus for accomplishing the method of claims 1 to 14 for air conditioning vehicles, especially aircraft, said apparatus having a device for supplying an airflow to the passenger cabin, which comprises outside air, which is possibly temperature-controlled, and a portion of recirculated air, and having a control unit with at least one CO₂ sensor which limits the portion of recirculated air in the supplied airflow in such a way that the CO₂ portion in the air in the passenger cabin does not exceed a specific limit value,
**characterised in that**
in the outgoing or incoming air at least one humidity sensor is provided, the output signal of which is applied to the control unit, and **in that** the latter is configured in such a way that it so controls the portion of recirculated air in the amount of air being circulated that the relative air humidity is kept in a humidity range which is greater than the relative humidity of the supplied outside air after it has been heated to room temperature.

16. Apparatus according to claim 15,
**characterised in that** at least one cabin ceiling or respectively one seat is present in the vehicles, and **in that** a large-surface filter (4) with low flow resistance can be fitted in the cabin ceiling and/or in the rear side of a seat (1), especially in the seat back (11).

17. Apparatus according to claim 16,
**characterised in that** the filter (4) is configured in such a way that it cleans the air in respect of odour and aerosols.

18. Apparatus according to claim 16 or 17,
**characterised in that** the filter (4) is a microfilter or a composite filter.

19. Apparatus according to claim 18,
**characterised in that** the filter (4) is a microfilter with an activated carbon coating or an activated carbon cartridge and/or a microfilter with an additional zeolite filter.

20. Apparatus according to one of claims 16 to 19,
**characterised in that** the filter (4) is electrically biased.

21. Apparatus according to one of claims 16 to 21,
**characterised in that** the filter (4) has a fibre mat.

22. Apparatus according to one of claims 15 to 21,
**characterised in that** the circulated air is supplied at a lower velocity as a result of the (4) filters which are realised with a large surface.

23. Apparatus according to claim 22,
**characterised in that** the air supply system is designed in such a way that it supplies outside air of at least 0.5 m³/min per passenger.

24. Apparatus according to one of claims 15 to 23,
**characterised in that** the air supply system is designed in such a way that it ensures the air is exchanged at least 20 times per hour.

25. Apparatus according to one of claims 15 to 24,
**characterised in that** a plurality of seats is present in the vehicles and with each of these seats is associated a means of controlling the airflow impinging upon this seat.

26. Apparatus according to one of claims 15 to 25,
**characterised in that** a plurality of seats is present in the vehicles and **in that** one room air condition gauge is provided per seat (1), which gauge is connected to the control unit, such that the surface temperature of the air exit surface, through which the airflow is lead into the cabin, and the air movement are controlled from a physiological viewpoint and especially according to thermal comfort.

## Revendications

1. Procédé de climatisation de véhicules, en particulier d'avions, selon lequel la veine d'air alimentant la cabine de passagers se compose d'air extérieur, le cas échéant mis à la température et d'une fraction d'air ambiant, la fraction d'air ambiant dans la veine d'air d'alimentation étant limitée à l'aide d'au moins un capteur de gaz carbonique CO₂, de sorte que la fraction de gaz carbonique CO₂ dans l'air de la cabine de passagers ne dépasse une certaine valeur limite, et on introduit de l'air extérieur sec,
**caractérisé en ce qu'**
en dessous de la valeur limite prédéterminée par le capteur de gaz carbonique CO₂ dans l'air ambiant, on commande la teneur en air ambiant dans la veine d'air d'alimentation de façon à maintenir l'humidité relative dans une plage d'humidité supérieure à l'humidité relative de l'air extérieur fourni après réchauffage à la température ambiante, et la veine d'air d'alimentation est introduite dans la cabine de passagers à travers au moins un filtre (4).

2. Procédé selon la revendication 1,
**caractérisé en ce que**
l'humidité relative à la température de la cabine, en particulier à 23°C représente au moins 20 % et de préférence dépasse 30 %.

3. Procédé selon l'une quelconque des revendications 1 et 2,
**caractérisé en ce que**
la valeur limite de la teneur en gaz carbonique CO₂ est de 0,15 % en volume et de préférence 0,10 % en volume.

4. Procédé selon l'une quelconque des revendications 1 à 3,
**caractérisé en ce qu'**
on condense l'humidité contenue dans l'air évacué et on réintroduit cette humidité dans la veine d'air alimentant la cabine de passagers.

5. Procédé selon l'une quelconque des revendications 1 à 4,
**caractérisé en ce que**
le ou les filtres (4) sont des filtres de grande surface à faible résistance aéraulique qui nettoient l'air en enlevant les odeurs et les aérosols.

6. Procédé selon la revendication 5,
**caractérisé en ce que**
le ou les filtres (4) sont prévus dans l'orifice de sortie de la veine d'air débouchant dans la cabine de passager.

7. Procédé selon l'une quelconque des revendications 5 ou 6,
**caractérisé en ce qu'**
au moins une partie de la veine d'air sort par des buses de sortie.

8. Procédé selon l'une quelconque des revendications 1 à 7,
**caractérisé en ce que**
la veine d'air arrive par le plafond de la cabine.

9. Procédé selon la revendication 8,
**caractérisé en ce que**
le ou les filtres (4) sont prévus dans une cavité au-dessus du plafond.

10. Procédé selon l'une quelconque des revendications 5 ou 6,
**caractérisé en ce que**
l'introduction de la veine d'air se fait par l'intermédiaire du côté arrière de chaque siège avant.

11. Procédé selon la revendication 10,
**caractérisé en ce que**
le ou les filtres (4) sont prévus dans le siège avant respectif, en particulier dans son dossier (11).

12. Procédé selon l'une quelconque des revendications 1 à 11,
**caractérisé en ce que**
l'air est aspiré de l'habitacle, notamment en partie par les sièges (1) et en particulier par les dossiers (11) des sièges (1).

13. Procédé selon la revendication 12,
**caractérisé en ce que**
l'air aspiré par les dossiers (11) constitue essentiellement de l'air évacué.

14. Procédé selon l'une quelconque des revendications 12 ou 13,
**caractérisé en ce que**
l'air aspiré à travers les dossiers (11) est conduit à travers un filtre (4) prévu dans le siège (1) pour sortir de nouveau par le côté arrière du dossier (11).

15. Dispositif pour la mise en oeuvre du procédé selon l'une quelconque des revendications 1 à 14, pour climatiser des véhicules et en particulier des avions, comprenant une installation pour introduire une veine d'air dans la cabine de passagers, cette veine se composant le cas échéant d'air extérieur mis à la température et d'une fraction d'air ambiant, ainsi qu'une unité de commande ayant au moins un capteur CO₂ qui limite la teneur de l'air ambiant de la veine d'air d'alimentation pour que la fraction de gaz carbonique CO₂ dans l'air de la cabine de passagers ne dépasse pas une certaine valeur limite,
**caractérisé en ce que**
la sortie d'air ou l'alimentation en air comporte au moins un capteur d'humidité dont le signal de sortie est appliqué à l'unité de commande et
cette unité est réalisée pour commander la fraction d'air ambiant dans la quantité d'air mise en circulation pour que l'humidité relative soit maintenue dans une plage d'humidité supérieure à l'humidité relative de l'air extérieur fourni, après réchauffage à température ambiante.

16. Dispositif selon la revendication 15,
**caractérisé en ce que**
dans les véhicules il est prévu au moins un plafond de cabine ou un siège et dans le plafond de cabine et/ou dans le côté arrière d'un siège (1), en particulier dans son dossier (11), il est prévu un filtre de grande surface (4) à faible résistance aéraulique.

17. Dispositif selon la revendication 16,
**caractérisé en ce que**
le filtre (4) est réalisé pour nettoyer l'air et en enlever les odeurs et les aérosols.

18. Dispositif selon l'une quelconque des revendications 16 ou 17,
**caractérisé en ce que**
le filtre (4) est un microfiltre ou un filtre composite.

19. Dispositif selon la revendication 18,
**caractérisé en ce que**
le filtre (4) est un microfiltre avec un revêtement de charbon actif ou une cassette de charbon actif et/ou un microfiltre avec un filtre supplémentaire de zéolithes.

20. Dispositif selon l'une quelconque des revendications 16 à 19,
**caractérisé en ce que**
le filtre (4) est précontraint électriquement.

21. Dispositif selon l'une quelconque des revendications 16 à 21,
**caractérisé en ce que**
le filtre (4) comporte des fibres non tissées.

22. Dispositif selon l'une quelconque des revendications 15 à 21,
**caractérisé en ce que**
l'air mis en circulation est fourni à faible vitesse du fait du filtre (4) de grande surface.

23. Dispositif selon la revendication 22,
**caractérisé en ce que**
l'alimentation en air est conçue pour fournir au moins 0,5 m³/mn d'air extérieur et par passager.

24. Dispositif selon l'une quelconque des revendications 15 à 23,
**caractérisé en ce que**
l'alimentation en air est conçue pour assurer un renouvellement d'au moins 20 fois par heure de l'air.

25. Dispositif selon l'une quelconque des revendications 15 à 24,
**caractérisé en ce que**
dans les véhicules il y a plusieurs sièges et dans chacun des sièges il y a une possibilité de commande de la veine d'air alimentant ce siège.

26. Dispositif selon l'une quelconque des revendications 15 à 25,
**caractérisé en ce que**
dans les véhicules il y a plusieurs sièges et par siège (1) il est prévu un appareil de mesure de climat ambiant relié à l'unité de commande pour commander la température de surface de la surface de sortie d'air traversée par la veine d'air arrivant dans la cabine et le mouvement de l'air se fait selon des points de vue physiologiques et en particulier une compatibilité thermique.
